(19) **Europäisches Patentamt European Patent Office Office européen des brevets**

(11) **EP 4 060 425 B1**

(12) **FASCICULE DE BREVET EUROPEEN**

(45) Date de publication et mention de la délivrance du brevet:
**16.10.2024 Bulletin 2024/42**

(21) Numéro de dépôt: **21162936.5**

(22) Date de dépôt: **16.03.2021**

(51) Classification Internationale des Brevets (IPC):
*G04B 17/06* (2006.01)  *G04B 17/22* (2006.01)
*C22C 27/02* (2006.01)

(52) Classification Coopérative des Brevets (CPC):
**G04B 17/066; C22C 27/02; G04B 17/227**

(54) **SPIRAL POUR UN MOUVEMENT HORLOGER**

SPIRALFEDER FÜR UHRWERK

HAIRSPRING FOR TIMEPIECE MOVEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**21.09.2022 Bulletin 2022/38**

(73) Titulaire: **Nivarox-FAR S.A.**
**2400 Le Locle (CH)**

(72) Inventeurs:
• **CHARBON, Christian**
**2054 Chézard-St-Martin (CH)**
• **MICHELET, Lionel**
**1450 Sainte-Croix (CH)**
• **VERARDO, Marco**
**2336 Les Bois (CH)**

(74) Mandataire: **ICB SA**
**Faubourg de l'Hôpital, 3**
**2001 Neuchâtel (CH)**

(56) Documents cités:
**WO-A2-2005/045532 CH-A2- 714 494**

**Description**

Domaine de l'invention

L'invention concerne un ressort spiral destiné à équiper un balancier d'un mouvement d'horlogerie. Elle se rapporte également au procédé de fabrication de ce ressort spiral.

Arrière-plan de l'invention

La fabrication de ressorts spiraux pour l'horlogerie doit faire face à des contraintes souvent à première vue incompatibles :

- nécessité d'obtention d'une limite élastique élevée,

- facilité d'élaboration, notamment de tréfilage et de laminage,

- excellente tenue en fatigue,

- stabilité des performances dans le temps,

- faibles sections.

L'alliage choisi pour un ressort spiral doit en outre présenter des propriétés garantissant le maintien des performances chronométriques malgré la variation des températures d'utilisation d'une montre incorporant un tel ressort spiral. Le coefficient thermoélastique, dit aussi CTE, de l'alliage a alors une grande importance. Pour former un oscillateur chronométrique avec un balancier en CuBe ou en maillechort, un CTE de +/- 10 ppm/°C doit être atteint.
La formule qui lie le CTE de l'alliage et les coefficients de dilatation du spiral ($\alpha$) et du balancier ($\beta$) au coefficient thermique (CT) de l'oscillateur est la suivante :

$$CT = \frac{dM}{dT} = \left( \frac{1}{2E} \frac{dE}{dT} - \beta + \frac{3}{2} \alpha \right) \times 86400 \frac{s}{j \, °C}$$

les variables M et T étant respectivement la marche en s/j et la température en °C, E étant le module de Young du ressort spiral avec (1/E. dE/dT) qui est le CTE de l'alliage spiral, les coefficients de dilatation étant exprimés en °C$^{-1}$.
Pratiquement, le CT est calculé comme suit :

$$CT = \frac{(M_{38°C} - M_{8°C})}{30}$$

avec une valeur qui doit être comprise entre - 0,6 et + 0,6 s/j°C.
De l'art antérieur, on connaît des ressorts spiraux pour l'horlogerie réalisés dans des alliages binaires de Nb-Ti avec des pourcentages en poids de Ti typiquement compris entre 40 et 60% et plus spécifiquement avec un pourcentage de 47%. Avec un schéma de déformation et de traitements thermiques adaptés, ce ressort spiral présente une microstructure biphasée comportant du niobium en phase bêta et du titane sous forme de précipités en phase alpha. Le Nb en phase bêta écroui présente un CTE fortement positif tandis que le Ti en phase alpha possède un CTE fortement négatif permettant de ramener l'alliage biphasé à un CTE proche de zéro, ce qui est particulièrement favorable pour le CT. Un exemple d'un tel ressort spiral est divulgué dans le document CH714494A2.
On observe néanmoins certains désavantages à l'utilisation d'alliages binaires Nb-Ti pour les ressorts spiraux. L'alliage binaire Nb-Ti est particulièrement favorable pour un faible CT comme susmentionné. Par contre, sa composition n'est pas optimisée pour l'erreur secondaire qui est une mesure de la courbure de la marche qui est approximée ci-dessus par une droite passant par deux points (8°C et 38°C). La marche peut s'écarter de ce comportement linéaire entre 8°C et 38°C et l'erreur secondaire à 23°C est une mesure de cet écart à la température de 23°C. Typiquement, pour un alliage NbTi47, l'erreur secondaire est de 4,5 s/j alors que préférablement elle devrait être comprise entre - 3 et + 3 s/j.
Un autre désavantage des alliages binaires Nb-Ti est lié à la précipitation du titane qui se déroule principalement après l'étape d'estrapadage lors de l'étape de fixage. Cette étape est cruciale car elle permet de fixer la forme du spiral et d'obtenir le CT proche de zéro suite à la précipitation du Ti. En pratique, les temps de précipitation sont très longs avec, pour un alliage NbTi47, des temps compris entre 8 et 30 heures et en moyenne de l'ordre de 20 heures, ce qui augmente significativement les temps de production. Hormis la problématique des temps de production élevés, un pourcentage trop élevé de titane peut mener à la formation de phases martensitiques fragiles qui rendent la déformation du matériau difficile, voire impossible pour la réalisation d'un ressort spiral. Il convient dès lors de ne pas incorporer trop de titane dans l'alliage.

A ce jour, il y a toujours un besoin pour de nouvelles compositions chimiques remplissant les différents critères d'absence de phases fragiles, de réduction des temps de production et de réduction de l'erreur secondaire tout en maintenant un faible CT pour la réalisation de ressorts spiraux.

## Résumé de l'invention

L'invention a pour objet de proposer une nouvelle composition chimique pour ressort spiral permettant de pallier aux inconvénients précités.

A cet effet, l'invention concerne un ressort spiral d'horlogerie tel que défini dans la revendication indépendante 1 annexée. Des réalisations préférées sont définies dans les revendications dépendantes 2 à 9.

L'invention concerne également le procédé de fabrication de ce ressort spiral d'horlogerie, comme défini dans la revendication indépendante 10 et dans les revendications dépendantes 11 à 14 annexées.

D'autres caractéristiques et avantages de l'invention apparaîtront à la lecture de la description détaillée ci-après.

## Description détaillée

L'invention concerne un ressort spiral d'horlogerie réalisé dans un alliage au moins ternaire comportant du niobium et du titane et un ou plusieurs éléments additionnels.

Selon l'invention, cet alliage est constitué:

- de Nb, Ti et au moins un élément choisi parmi le V et le Ta,

- optionnellement d'au moins un élément choisi parmi le Zr et Hf,

- optionnellement d'au moins un élément choisi parmi le W et Mo,

- de traces éventuelles d'autres éléments choisis parmi O, H, C, Fe, N, Ni, Si, Cu, Al,

- avec les pourcentages en poids suivants pour un total de 100% :

- une teneur totale en Nb, V et Ta comprise entre 40 et 85% avec de préférence une teneur en Nb supérieure à 45%, voire supérieure ou égale à 50%,

- une teneur totale en Ti, Zr et Hf comprise entre 15 et 55% avec de préférence une teneur en Ti minimum de 15%,

- une teneur pour respectivement le W et le Mo comprise entre 0 et 2.5%,

- une teneur pour chacun desdits éléments choisis parmi O, H, C, Fe, N, Ni, Si, Cu, Al comprise entre 0 et 1600 ppm avec la somme desdites traces inférieure ou égale à 0.3% en poids.

Selon l'invention, le Nb est en partie remplacé par du Ta et/ou du V. Le remplacement partiel du Nb par le Ta et/ou le V a pour objet de réduire l'erreur secondaire. Des essais ont été réalisés sur des alliages binaires Nb-V et Nb-Ta pour montrer respectivement l'effet du V et du Ta sur l'erreur secondaire. L'erreur secondaire est mesurée à 23°C. Il s'agit de l'écart de marche à 23°C par rapport à la droite reliant la marche à 8°C à celle à 38°C. Par exemple, la marche à 8°C, 23°C et 38°C peut être mesurée à l'aide d'un appareil Witschi type chronoscope.

Le tableau 1 ci-après reprend des données de référence pour le Nb pur, le V pur, le Ta pur et l'alliage NbTi47 et les valeurs obtenues en fonction du pourcentage en poids de V et de Ta dans un alliage binaire respectivement Nb-V et Nb-Ta. Le Nb pur a une erreur secondaire à 23°C de -6,6 s/j. La précipitation du Ti en phase alpha dans l'alliage NbTi47 compense l'effet négatif du Nb avec cependant une remontée trop importante avec une valeur atteignant 4,5 s/j, soit un delta de 11,1 s/j, suite à l'ajout du Ti. Le vanadium et le tantale purs ont une erreur secondaire nettement plus négative que le Nb pur avec des valeurs respectivement de -24,9 et -28,7 s/j. Le remplacement partiel du Nb par du V et/ou du Ta permet d'abaisser l'erreur secondaire à des valeurs négatives inférieures à -7 s/j. Ainsi, le remplacement croissant du Nb par du V ou du Ta allant de 5% à 25% abaisse l'erreur secondaire d'environ -7 s/j jusqu'à -12 s/j. Le Nb peut ainsi être remplacé par du V ou du Ta ou par une combinaison de V et de Ta pour atteindre cette gamme de valeurs. L'erreur secondaire est comprise entre -7 s/j et -12 s/j pour une teneur de Ta seul, de V seul ou une teneur totale de Ta et V comprise entre 5% et 25% en poids. De préférence, l'erreur secondaire est comprise entre -9 et -12 s/j pour une teneur de Ta seul, de V seul ou une teneur totale de Ta et V comprise entre 10 et 25% et plus préférentiellement entre 15 et 25% en poids. L'ajout dans l'alliage Nb-V/Ta d'un ou plusieurs éléments formant une phase alpha de précipités lors de l'étape de fixage permet de compenser cette valeur négative et d'atteindre une valeur proche de 0 s/j. De préférence, la teneur du ou des éléments formant une phase alpha de précipités est comprise pour l'ensemble de ces éléments entre 15 et 55% en poids. L'élément formant une phase alpha est au moins le Ti avec de préférence une teneur minimum de 15%. Il peut, en plus du Ti, s'agir de l'Hf et/ou du Zr qui forme avec le Ti une unique phase alpha de précipités lors de l'étape de fixage. Lorsque l'alliage comprend du Zr et/ou du Hf, la teneur totale de Zr et d'Hf est comprise entre 1 et 40%, de préférence entre 5 et 25%, plus préférentiellement entre 10 et 25%, encore plus préférentiellement entre 15 et 25% en poids.

Tableau 1

| Alliage : | % poids V/Ta | Erreur secondaire à 23°C |
|---|---|---|
| Niobium pur | | -6,6 s/j |
| Vanadium pur | | -24,9 s/j |
| Tantale pur | | -28,7 s/j |
| NbTi47 | | 4.5 s/j |
| | | |
| $Nb_{100}$ | 0% | -6,6 s/j |
| $Nb_{95}V_5$ | 5% | -7,2 s/j |
| $Nb_{90}V_{10}$ | 10% | -8,6 s/j |
| $Nb_{85}V_{15}$ | 15% | -9,0 s/j |
| $Nb_{80}V_{20}$ | 20% | -11,0 s/j |
| $Nb_{75}V_{25}$ | 25% | -11,5 s/j |
| | | |
| $Nb_{100}$ | 0% | -6,6 s/j |
| $Nb_{95}Ta_5$ | 5% | -8,0 s/j |
| $Nb_{90}Ta_{10}$ | 10% | -8,7 s/j |
| $Nb_{85}Ta_{15}$ | 15% | -10,5 s/j |
| $Nb_{80}Ta_{20}$ | 20% | -11,6 s/j |
| $Nb_{75}Ta_{25}$ | 25% | -12,0 s/j |

L'alliage peut en outre comporter du W et du Mo dans une teneur en poids pour chacun comprise entre 0 et 2.5% afin d'augmenter le module de Young de l'alliage, ce qui permet pour un couple donné du ressort de réduire l'épaisseur du spiral et par là-même d'alléger le spiral.

D'une manière particulièrement avantageuse, l'alliage utilisé dans la présente invention ne comprend pas d'autres éléments à l'exception d'éventuelles et inévitables traces.

Plus particulièrement, la teneur en oxygène est inférieure ou égale à 0.10% en poids du total, voire encore inférieure ou égale à 0.085% en poids du total.

Plus particulièrement, la teneur en carbone est inférieure ou égale à 0.04% en poids du total, notamment inférieure ou égale à 0.020% en poids du total, voire encore inférieure ou égale à 0.0175% en poids du total.

Plus particulièrement, la teneur en fer est inférieure ou égale à 0.03% en poids du total, notamment inférieure ou égale à 0.025% en poids du total, voire encore inférieure ou égale à 0.020% en poids du total.

Plus particulièrement, la teneur en azote est inférieure ou égale à 0.02% en poids du total, notamment inférieure ou égale à 0.015% en poids du total, voire encore inférieure ou égale à 0.0075% en poids du total.

Plus particulièrement, la teneur en hydrogène est inférieure ou égale à 0.01% en poids du total, notamment inférieure ou égale à 0.0035% en poids du total, voire encore inférieure ou égale à 0.0005% en poids du total.

Plus particulièrement, la teneur en silicium est inférieure ou égale à 0.01% en poids du total.

Plus particulièrement, la teneur en nickel est inférieure ou égale à 0.01% en poids du total, notamment inférieure ou égale à 0.16% en poids du total.

Plus particulièrement, la teneur en cuivre est inférieure ou égale à 0.01% en poids du total, notamment inférieure ou égale à 0.005% en poids du total.

Plus particulièrement, la teneur en aluminium est inférieure ou égale à 0.01% en poids du total.

De façon avantageuse, ce ressort spiral a une microstructure multi-phasée comportant une unique phase bêta de niobium, de vanadium et/ou de tantale et une unique phase alpha de titane, et d'hafnium et/ou de zirconium lorsque l'alliage comporte de l'hafnium et/ou du zirconium. En présence de tantale et de vanadium, la microstructure pourrait également comporter un intermétallique de type TaV$_2$. Pour obtenir une telle microstructure, il est nécessaire de précipiter la phase alpha (Ti, Hf, Zr) par traitement thermique comme décrit ci-après.

Le ressort spiral élaboré avec cet alliage a une limite élastique supérieure ou égale à 500 MPa et plus précisément comprise entre 500 et 1000 MPa. De façon avantageuse, il a un module d'élasticité supérieur ou égal à 100 GPa et de préférence supérieur ou égal à 110 GPa.

L'invention concerne également le procédé de fabrication du ressort spiral d'horlogerie, caractérisé en ce qu'on met en oeuvre successivement les étapes suivantes :

a) élaboration ou mise à disposition d'une ébauche dans un alliage constitué de la façon indiquée en haut ;

b) trempe de type bêta de ladite ébauche, de façon à ce que le titane, et le zirconium et l'hafnium lorsqu'ils sont présents, dudit alliage soit essentiellement sous forme de solution solide avec le niobium ainsi que le tantale et/ou le vanadium en phase bêta ;

c) application audit alliage de séquences de déformation suivie d'un traitement thermique. On entend par déformation une déformation par tréfilage et/ou laminage. Le tréfilage peut nécessiter l'utilisation d'une ou plusieurs filières lors d'une même séquence ou lors de différentes séquences si nécessaires. Le tréfilage est réalisé jusqu'à l'obtention d'un fil de section ronde. Le laminage peut être effectué lors de la même séquence de déformation que le tréfilage ou dans une autre séquence. Avantageusement, la dernière séquence appliquée à l'alliage est un laminage de préférence à profil rectangulaire compatible avec la section d'entrée d'une broche d'estrapadage.

d) estrapadage pour former un ressort spiral, suivi d'un traitement thermique final de fixage.

Dans ces séquences couplées de déformation-traitement thermique, chaque déformation est effectuée avec un taux de déformation donné compris entre 1 et 5, ce taux de déformation répondant à la formule classique 2ln(d0/d), où d0 est le diamètre de la dernière trempe bêta, et où d est le diamètre du fil écroui. Le cumul global des déformations sur l'ensemble de cette succession de séquences amène un taux total de déformation compris entre 1 et 14. Chaque séquence couplée de déformation-traitement thermique comporte, à chaque fois, un traitement thermique de précipitation de la phase alpha (Ti, Zr et/ou Hf).

La trempe bêta préalable aux séquences de déformation et de traitement thermique est un traitement de mise en solution, avec une durée comprise entre 5 minutes et 2 heures à une température comprise entre 700°C et 1000°C, sous vide, suivie d'un refroidissement sous gaz. Plus particulièrement encore, cette trempe bêta est un traitement de mise en solution, d'1 heure à 800°C sous vide, suivie d'un refroidissement sous gaz.

Pour revenir aux séquences couplées de déformation-traitement thermique, le traitement thermique est un traitement de précipitation d'une durée comprise entre 1 heure et 200 heures à une température comprise entre 300°C et 700°C. Plus particulièrement, la durée est comprise entre 5 heures et 30 heures avec une température de maintien comprise entre 400°C et 600°C.

Plus particulièrement, le procédé comporte entre une et cinq séquences couplées de déformation-traitement thermique.

Plus particulièrement, la première séquence couplée de déformation-traitement thermique comporte une première déformation avec au moins 30 % de réduction de section.

Plus particulièrement, chaque séquence couplée de déformation-traitement thermique, autre que la première, comporte une déformation entre deux traitements thermiques avec au moins 25 % de réduction de section.

Plus particulièrement, après cette élaboration de ladite ébauche en alliage, et avant les séquences de déformation-traitement thermique, dans une étape supplémentaire, on ajoute à l'ébauche une couche superficielle de matériau ductile pris parmi le cuivre, le nickel, le cupro-nickel, le cupro-magnanèse, l'or, l'argent, le nickel-phosphore Ni-P et le nickel-bore Ni-B, ou similaire, pour faciliter la mise en forme sous forme de fil lors de la déformation. Et, après les séquences de déformation-traitement thermique ou après l'étape d'estrapadage, on débarrasse le fil de sa couche du matériau ductile, notamment par attaque chimique.

Dans une variante, on dépose la couche superficielle de matériau ductile de façon à constituer un ressort spiral dont le pas n'est pas un multiple de l'épaisseur de la lame. Dans une autre variante, on dépose la couche superficielle de matériau ductile de façon à constituer un ressort dont le pas est variable.

Dans une application horlogère particulière, du matériau ductile ou du cuivre est ainsi ajouté à un moment donné pour faciliter la mise en forme sous forme de fil, de telle manière à ce qu'il en reste une épaisseur de 10 à 500 micromètres sur le fil au diamètre final de 0.3 à 1 millimètres. Le fil est débarrassé de sa couche de matériau ductile ou cuivre notamment par attaque chimique, puis est laminé à plat avant la fabrication du ressort proprement dit par estrapadage.

L'apport de matériau ductile ou cuivre peut être galvanique, ou bien mécanique, c'est alors une chemise ou un tube de matériau ductile ou cuivre qui est ajusté sur une barre d'alliage à un gros diamètre, puis qui est amincie au cours des étapes de déformation du barreau composite.

L'enlèvement de la couche est notamment réalisable par attaque chimique, avec une solution à base de cyanures ou à base d'acides, par exemple d'acide nitrique.

Le traitement thermique final est réalisé pendant une durée comprise entre 1 heure et 200 heures à une température comprise entre 300°C et 700°C. Plus particulièrement, la durée est comprise entre 5 heures et 30 heures à une température de maintien comprise entre 400°C et 600°C. Durant ce traitement thermique final, la précipitation de la phase alpha est finalisée. En présence d'hafnium et/ou de zirconium, le temps de traitement final peut être réduit de quelques heures avec typiquement un temps de précipitation compris entre 4 et 8 heures à une température de maintien comprise entre 400°C et 600°C.

Par une combinaison adéquate de séquences de déformation et de traitement thermique, il est possible d'obtenir une microstructure très fine, en particulier nanométrique, composée de la phase bêta de niobium, tantale et/ou vanadium et de la phase alpha de titane, et de zirconium et/ou d'hafnium si l'alliage comporte un ou deux de ces deux derniers éléments. Cet alliage combine une limite élastique très élevée, supérieure au moins à 500 MPa et un module d'élasticité supérieur ou égal à 100 GPa. Cette combinaison de propriétés convient bien pour un ressort spiral. En outre, cet alliage selon l'invention se laisse facilement recouvrir de matériau ductile ou cuivre, ce qui facilite grandement sa déformation par tréfilage.

Un alliage de type au moins ternaire comportant du niobium, du titane, du tantale et/ou du vanadium du type sélectionné ci-dessus pour la mise en oeuvre de l'invention, présente également un effet similaire à celui de l'« Elinvar », avec un coefficient thermo-élastique pratiquement nul dans la plage de températures d'utilisation usuelle de montres, et apte à la fabrication de spiraux auto-compensateurs.

**Revendications**

1. Ressort spiral destiné à équiper un balancier d'un mouvement d'horlogerie, **caractérisé en ce que** le ressort spiral est réalisé dans un alliage constitué :

   - de Nb, Ti et au moins un élément choisi parmi le V et le Ta,
   - optionnellement d'au moins un élément choisi parmi le Zr et Hf,
   - optionnellement d'au moins un élément choisi parmi le W et Mo,
   - de traces éventuelles d'autres éléments choisis parmi O, H, C, Fe, N, Ni, Si, Cu, Al,

   l'alliage comportant les pourcentages en poids suivants :

   - ◦ une teneur totale en Nb, V et Ta comprise entre 40 et 85%,
   - ◦ une teneur totale en Ti, Zr et Hf comprise entre 15 et 55%,
   - ◦ une teneur pour respectivement le W et le Mo comprise entre 0 et 2.5%,
   - ◦ une teneur pour chacun desdits éléments choisis parmi O, H, C, Fe, N, Ni, Si, Cu, Al comprise entre 0 et 1600 ppm avec la somme desdites traces inférieure ou égale à 0.3% en poids,
   - ◦ une teneur en Nb supérieure à 45% ,
   - ◦ une teneur en Ti supérieure ou égale à 15% , et
   - ◦ la somme de la teneur en V et Ta étant comprise entre 5 et 25% . -

2. Ressort spiral selon l'une des revendications précédentes, **caractérisé en ce que** la somme de la teneur en V et Ta est comprise entre 10 et 25% en poids.

3. Ressort spiral selon l'une des revendications précédentes, **caractérisé en ce que** la somme de la teneur en V et Ta est comprise entre 15 et 25% en poids.

**4.** Ressort spiral selon l'une des revendications précédentes, **caractérisé en ce qu'**il comporte du Zr et/ou du Hf avec la somme de la teneur en Zr et Hf comprise entre 1 et 40% en poids.

**5.** Ressort spiral selon l'une des revendications précédentes, **caractérisé en ce qu'**il comporte du Zr et/ou du Hf avec la somme de la teneur en Zr et Hf comprise entre 5 et 25% en poids.

**6.** Ressort spiral selon l'une des revendications précédentes, **caractérisé en ce qu'**il comporte du Zr et/ou du Hf avec la somme de la teneur en Zr et Hf comprise entre 10 et 25% en poids.

**7.** Ressort spiral selon l'une des revendications précédentes, **caractérisé en ce qu'**il comporte du Zr et/ou du Hf avec la somme de la teneur en Zr et Hf comprise entre 15 et 25% en poids.

**8.** Ressort spiral selon l'une des revendications précédentes, ayant une microstructure comportant une phase bêta de Nb, et de V et/ou de Ta et une phase alpha de Ti, et de Zr et/ou de Hf lorsque l'alliage comporte du Zr et/ou du Hf.

**9.** Ressort spiral selon l'une des revendications précédentes, **caractérisé en ce qu'**il a une limite élastique supérieure ou égale à 500 MPa, et un module d'élasticité supérieur ou égal à 100 GPa, de préférence supérieur ou égal à 110 GPa.

**10.** Procédé de fabrication d'un ressort spiral destiné à équiper un balancier d'un mouvement d'horlogerie, le procédé comprenant successivement :

- une étape d'élaboration d'une ébauche dans un alliage au moins ternaire selon l'une des revendications 1 à 8 ;
- une étape de trempe de type bêta de ladite ébauche, de façon à ce que le titane dudit alliage soit essentiellement sous forme de solution solide avec le niobium, et le vanadium et/ou le tantale en phase bêta, le zirconium et/ou l'hafnium dudit alliage étant également essentiellement sous forme de solution solide lorsque l'alliage comporte du zirconium et/ou de l'hafnium,
- une étape d'application audit alliage d'une succession de séquences de déformation suivie d'un traitement thermique intermédiaire,
- une étape d'estrapadage pour former le ressort spiral,
- une étape de traitement thermique final.

**11.** Procédé de fabrication d'un ressort spiral selon la revendication précédente, **caractérisé en ce que** la trempe de type bêta est un traitement de mise en solution, avec une durée comprise entre 5 minutes et 2 heures à une température comprise entre 700°C et 1000°C, sous vide, suivie d'un refroidissement sous gaz.

**12.** Procédé de fabrication d'un ressort spiral selon l'une des revendications 10 à 11, **caractérisé en ce que** le traitement thermique final ainsi que le traitement thermique intermédiaire de chaque séquence est un traitement de précipitation du Ti, et optionnellement du Zr et/ou Hf lorsque l'alliage comporte du Zr et/ou Hf, en phase alpha, d'une durée comprise entre 1 heure et 200 heures à une température de maintien comprise entre 300°C et 700°C.

**13.** Procédé de fabrication d'un ressort spiral selon l'une des revendications 10 à 12, **caractérisé en ce que**, lorsque l'alliage comporte du Zr et/ou Hf, le traitement thermique final est réalisé à une température de maintien comprise entre 400°C et 600°C pendant une durée comprise entre 4 et 8 heures.

**14.** Procédé de fabrication d'un ressort spiral selon l'une des revendications 10 à 13, **caractérisé en ce que**, après l'étape d'élaboration de l'ébauche en alliage, et avant l'étape d'application d'une succession de séquences, on ajoute à ladite ébauche une couche superficielle de matériau ductile pris parmi le cuivre, le nickel, le cupro-nickel, le cupro-magnanèse, l'or, l'argent, le nickel-phosphore Ni-P et le nickel-bore Ni-B, pour faciliter la mise en forme sous forme de fil et **en ce que**, avant ou après l'étape d'estrapadage, on débarrasse ledit fil de sa couche dudit matériau ductile par attaque chimique.

**Patentansprüche**

**1.** Spiralfeder, die dazu bestimmt ist, eine Unruh eines Uhrwerks auszustatten, **dadurch gekennzeichnet, dass** die Spiralfeder aus einer Legierung hergestellt ist, bestehend:

- aus Nb, Ti und mindestens einem Element, das aus V und Ta ausgewählt ist,
- optional aus mindestens einem Element, das aus Zr und Hf ausgewählt ist,
- optional aus mindestens einem Element, das aus W und Mo ausgewählt ist,
- aus eventuellen Spuren anderer Elemente, die aus O, H, C, Fe, N, Ni, Si, Cu, Al ausgewählt sind, wobei die Legierung die folgenden Gewichtsprozente beinhaltet:

  ◦ einen Gesamtgehalt an Nb, V und Ta, der zwischen 40 und 85 % liegt,
  ◦ einen Gesamtgehalt an Ti, Zr und Hf, der zwischen 15 und 55 % liegt,
  ◦ einen Gehalt jeweils an W und Mo, der zwischen 0 und 2,5% liegt,
  ◦ einen Gehalt für jedes der Elemente, die aus O, H, C, Fe, N, Ni, Si, Cu, Al ausgewählt sind, der zwischen 0 und 1600 ppm liegt, wobei die Summe der Spuren kleiner oder gleich 0,3 Gew.-% ist,
  ◦ einen Gehalt an Nb von mehr als 45 %,
  ◦ einen Gehalt an Ti größer oder gleich 15 % und,
  ◦ die Summe des Gehalts an V und Ta zwischen 5 und 25 % liegt.

2. Spiralfeder nach einem der vorstehenden Ansprüche, **dadurch gekennzeichnet, dass** die Summe des Gehalts an V und Ta zwischen 10 und 25 Gew.-% liegt.

3. Spiralfeder nach einem der vorstehenden Ansprüche, **dadurch gekennzeichnet, dass** die Summe des Gehalts an V und Ta zwischen 15 und 25 Gew.-% liegt.

4. Spiralfeder nach einem der vorstehenden Ansprüche, **dadurch gekennzeichnet, dass** sie Zr und/oder Hf beinhaltet, wobei die Summe des Gehalts an Zr und Hf zwischen 1 und 40 Gew.-% liegt.

5. Spiralfeder nach einem der vorstehenden Ansprüche, **dadurch gekennzeichnet, dass** sie Zr und/oder Hf beinhaltet, wobei die Summe des Gehalts an Zr und Hf zwischen 5 und 25 Gew.-% liegt.

6. Spiralfeder nach einem der vorstehenden Ansprüche, **dadurch gekennzeichnet, dass** sie Zr und/oder Hf beinhaltet, wobei die Summe des Gehalts an Zr und Hf zwischen 10 und 25 Gew.-% liegt.

7. Spiralfeder nach einem der vorstehenden Ansprüche, **dadurch gekennzeichnet, dass** sie Zr und/oder Hf beinhaltet, wobei die Summe des Gehalts an Zr und Hf zwischen 15 und 25 Gew.-% liegt.

8. Spiralfeder nach einem der vorstehenden Ansprüche, die eine Mikrostruktur aufweist, die eine Beta-Phase aus Nb und aus V und/oder aus Ta und eine Alpha-Phase aus Ti und aus Zr und/oder aus Hf beinhaltet, wenn die Legierung Zr und/oder Hf beinhaltet.

9. Spiralfeder nach einem der vorstehenden Ansprüche, **dadurch gekennzeichnet, dass** sie eine Streckgrenze von größer oder gleich 500 MPa und ein Elastizitätsmodul von größer oder gleich 100 GPa, vorzugsweise größer oder gleich 110 GPa, aufweist.

10. Verfahren zum Herstellen einer Spiralfeder, die dazu bestimmt ist, eine Unruh eines Uhrwerks auszustatten, wobei das Verfahren nacheinander umfasst:

    - einen Schritt zum Ausarbeiten eines Rohwerks aus einer mindestens ternären Legierung nach einem der Ansprüche 1 bis 8;
    - einen Schritt des Abschreckens des Beta-Typs des Rohwerks, sodass das Titan der Legierung im Wesentlichen in Form einer festen Lösung mit Niob und Vanadium und/oder Tantal in der Beta-Phase vorliegt, wobei das Zirkonium und/oder Hafnium der Legierung ebenfalls im Wesentlichen in Form einer festen Lösung vorliegt, wenn die Legierung Zirkonium und/oder Hafnium beinhaltet,
    - einen Schritt zum Anwenden auf die Legierung einer Folge von Verformungssequenzen, gefolgt von einer Zwischenwärmebehandlung,
    - einen Schritt zum Spreizen, um die Spiralfeder zu bilden,
    - einen Schritt zum abschließenden Wärmebehandeln.

11. Verfahren zum Herstellen einer Spiralfeder nach dem vorstehenden Anspruch, **dadurch gekennzeichnet, dass** das Abschrecken vom Beta-Typ eine Lösungsbehandlung ist, mit einer Dauer zwischen 5 Minuten und 2 Stunden bei einer Temperatur zwischen 700°C und 1000°C unter Vakuum, gefolgt von einer Abkühlung unter Gas.

12. Verfahren zum Herstellen einer Spiralfeder nach einem der Ansprüche 10 bis 11, **dadurch gekennzeichnet, dass** die abschließende Wärmebehandlung sowie die Zwischenwärmebehandlung jeder Sequenz eine Fällungsbehandlung von Ti, und optional von Zr und/oder Hf, wenn die Legierung Zr und/oder Hf beinhaltet, in der Alpha-Phase ist, mit einer Dauer zwischen 1 und 200 Stunden bei einer Haltetemperatur zwischen 300°C und 700°C.

13. Verfahren zum Herstellen einer Spiralfeder nach einem der Ansprüche 10 bis 12, **dadurch gekennzeichnet, dass**, wenn die Legierung Zr und/oder Hf beinhaltet, die abschließende Wärmebehandlung bei einer Haltetemperatur zwischen 400°C und 600°C für eine Dauer zwischen 4 und 8 Stunden durchgeführt wird.

14. Verfahren zum Herstellen einer Spiralfeder nach einem der Ansprüche 10 bis 13, **dadurch gekennzeichnet, dass** nach dem Schritt des Herstellens des Rohwerts aus der Legierung und vor dem Schritt des Anwendens einer Folge von Sequenzen dem Rohling eine Oberflächenschicht aus einem duktilen Werkstoff, übernommen aus Kupfer, Nickel, Kupfer-Nickel, Kupfer-Mangan, Gold, Silber, Nickel-Phosphor Ni-P und Nickel-Bor Ni-B hinzugefügt wird, um die Formgebung in Drahtform zu erleichtern, und dadurch, dass der Draht vor oder nach dem Schritt des Spreizens durch chemisches Ätzen von seiner Schicht aus dem duktilen Werkstoff befreit wird.

**Claims**

1. Hairspring intended to equip a balance of a horological movement, **characterised in that** the hairspring is made of an alloy consisting of:

   - Nb, Ti and at least one element selected from V and Ta,
   - optionally at least one element selected from Zr and Hf,
   - optionally at least one element selected from W and Mo,
   - optional traces of other elements selected from O, H, C, Fe, N, Ni, Si, Cu, Al, the alloy including the following percentages by weight:

     ◦ a total content of Nb, V and Ta of between 40 and 85%,
     ◦ a total content of Ti, Zr and Hf of between 15 and 55%,
     ◦ a content of W and Mo respectively of between 0 and 2.5%,
     ◦ a content for each of the said elements selected from O, H, C, Fe, N, Ni, Si, Cu and Al of between 0 and 1600 ppm, with the sum of the said traces being less than or equal to 0.3% by weight,
     ◦ a content of Nb greater than 45%,
     ◦ a content of Ti greater than or equal to 15%, and
     ◦ the sum of the content of V and Ta being between 5 and 25%.

2. Hairspring according to any one of the preceding claims, **characterised in that** the sum of the content of V and Ta is between 10 and 25% by weight.

3. Hairspring according to any one of the preceding claims, **characterised in that** the sum of the content of V and Ta is between 15 and 25% by weight.

4. Hairspring according to any one of the preceding claims, **characterised in that** it includes Zr and/or Hf with the sum of the content of Zr and Hf being between 1 and 40% by weight.

5. Hairspring according to any one of the preceding claims, **characterised in that** it includes Zr and/or Hf with the sum of the content of Zr and Hf being between 5 and 25% by weight.

6. Hairspring according to any one of the preceding claims, **characterised in that** it includes Zr and/or Hf with the sum of the content of Zr and Hf being between 10 and 25% by weight.

7. Hairspring according to any one of the preceding claims, **characterised in that** it includes Zr and/or Hf with the sum of the content of Zr and Hf being between 15 and 25% by weight.

8. Hairspring according to any one of the preceding claims, having a microstructure including a beta phase of Nb, and V and/or Ta and an alpha phase of Ti, and Zr and/or Hf when the alloy includes Zr and/or Hf.

9. Hairspring according to any one of the preceding claims, **characterised in that** it has a yield strength greater than or equal to 500 MPa, and a modulus of elasticity greater than or equal to 100 GPa, preferably greater than or equal to 110 GPa.

10. Method of manufacturing a hairspring intended to equip a balance of a horological movement, the method successively comprising:

   - a step of producing a blank from an at least ternary alloy according to any one of claims 1 to 8;
   - a step of beta-type quenching said blank, so that the titanium of said alloy is essentially in the form of a solid solution with the niobium, and the vanadium and/or tantalum in the beta phase, the zirconium and/or hafnium of said alloy also being essentially in the form of a solid solution when the alloy includes zirconium and/or hafnium,
   - a step of applying to said alloy a succession of deformation sequences followed by an intermediate heat treatment,
   - a winding step to form the hairspring,
   - a final heat treatment step.

11. Method of manufacturing a hairspring according to the preceding claim, **characterised in that** the beta type quenching is a solution treatment, with a duration of between 5 minutes and 2 hours at a temperature of between 700°C and 1000°C, under vacuum, followed by cooling under gas.

12. Method of manufacturing a hairspring according to any one of claims 10 to 11, **characterised in that** the final heat treatment as well as the intermediate heat treatment of each sequence is a precipitation treatment of Ti, and optionally Zr and/or Hf when the alloy includes Zr and/or Hf, in the alpha phase, for a period of between 1 hour and 200 hours at a holding temperature of between 300°C and 700°C.

13. Method of manufacturing a hairspring according to any one of claims 10 to 12, **characterised in that**, when the alloy includes Zr and/or Hf, the final heat treatment is carried out at a holding temperature of between 400°C and 600°C for a period of between 4 and 8 hours.

14. Method of manufacturing a hairspring according to any one of claims 10 to 13, **characterised in that**, after the step of producing the alloy blank, and before the step of applying a succession of sequences, a surface layer of ductile material selected from copper, nickel, cupro-nickel, cupro-magnanese, gold, silver, nickel-phosphorus Ni-P and nickel-boron Ni-B, is added to said blank in order to facilitate shaping into a wire form and **in that**, before or after the winding step, the said wire is freed of its layer of said ductile material by chemical etching.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 714494 A2